Europäisches Patentamt

European Patent Office

Office européen des brevets

(11) Publication number: **0 143 554**
**B1**

## (12) EUROPEAN PATENT SPECIFICATION

(45) Date of publication of patent specification: **01.03.89**

(51) Int. Cl.⁴: **G 11 B 17/04**

(21) Application number: **84307388.3**

(22) Date of filing: **26.10.84**

(54) **Disc reproducing apparatus.**

(30) Priority: **27.10.83 JP 201586/83**
**18.11.83 JP 217384/83**
**26.12.83 JP 251875/83**

(43) Date of publication of application:
**05.06.85 Bulletin 85/23**

(45) Publication of the grant of the patent:
**01.03.89 Bulletin 89/09**

(84) Designated Contracting States:
**AT BE CH DE FR GB IT LI NL SE**

(56) References cited:
**EP-A-0 076 583**
**GB-A-2 069 745**
**GB-A-2 085 213**
**US-A-3 899 181**
**US-A-4 439 852**

(73) Proprietor: **SONY CORPORATION**
**7-35 Kitashinagawa 6-Chome Shinagawa-ku**
**Tokyo 141 (JP)**

(72) Inventor: **Toyoguchi, Tsutomu c/o Sony**
**Corporation**
**Patent Division 7-35 Kitashinagawa-6**
**Shinagawa-ku Tokyo (JP)**
Inventor: **Watanabe, Yoshiro c/o Sony**
**Corporation**
**Patent Division 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to disc reproducing apparatus, and more particularly, but not exclusively, to disc players for playing back a recorded disc such as a digital audio disc.

In a disc loading system of a compact disc player (hereinafter referred to as a CD player) of the so-called built-in carrier type, a disc to be loaded is placed on a disc table, for example, of a drawer type. A CD player of this type requires a space in front sufficient to draw out the disc table. Particularly when the CD player is installed within a vehicle or the like, there is the problem that the withdrawn drawer protrudes within the vehicle. Thus it is preferred that the CD player be formed with a slot-in system in which a disc is directly loaded thereinto. In this case, various transporting mechanisms for moving the disc have been proposed. However, they all have the defect of making the CD player large in size, and so unsuitable for a vehicle.

Moreover, there is the problem that the disc is apt to be dirted and damaged by the disc transporting mechanism.

Furthermore, in previously proposed CD players of this kind, it is usual for the disc to be removed from a disk jacket when it is to be loaded. In consequence the disc may be dirted, in particular with greasy fingermarks, and the reproduction impaired.

It might be thought the disc could be handled and loaded onto the CD player while still in the jacket in a similar manner to a floppy disc. However, for a CD player the disc must be removed from the jacket, so the mechanisms used for floppy discs are not suitable.

UK patent specification GB—A—2 069 745 discloses a disc player in which a disc inserted into an insertion opening at the front of the disc player is gripped by a pair of rollers, at least one of which is driven by a drive source to locate the disc on a disc table.

European patent specification EP—A1—0 076 583 further discloses a disc player with provision for handling a disc such that the information-bearing portion of the disc is not damaged. This is achieved by providing a pair of stationary surfaces for receiving the disc which are shaped such that only the peripheral edge of the disc comes into contact with the pair of surfaces.

According to the present invention there is provided a disc player in which a disc inserted into an insertion opening at the front of the disc player is gripped by an upper and a lower roller at least one of which is driven by a drive source to locate said disc on a disc table; characterised in that:

each said roller is of relatively small diameter at its central portion and of gradually increasing diameter towards each end thereof;

said upper roller is supported by a chassis and said lower roller is rotatably attached to a support plate which is rotatably supported by said chassis and biased so as to bias said lower roller towards said upper roller;

a drive motor forms said drive source for rotatably driving said lower roller and is attached to said support plate; and

a separable member is provided on said chassis and is controlled by an electromagnetic means to have a first state in which said separable member contacts a rotating member which is pivoted to said support plate and rotated by said motor such that rotation of said rotating member causes a translating movement of said separable member in order to raise or lower said support plate, and a second state in which said separable member is separated from said rotating member.

The invention will now be described by way of example with reference to the accompanying drawings, throughout which like parts are referred to by like references, and in which:

Figure 1 is a perspective view of an example of a disc jacket container having incorporated therein a disc which is to be loaded into a CD player, a lid of the disc jacket container being shown removed therefrom;

Figure 1B is a longitudinal cross-sectional view of Figure 1A along its centre line with the lid of the disc jacket container closed;

Figure 1C is an enlarged side view of a part thereof;

Figure 1D is a longitudinally enlarged cross-sectional view of a central portion thereof;

Figure 1E is a longitudinally enlarged cross-sectional view of a side portion thereof;

Figure 2 is a perspective view of an embodiment of CD player according to this invention;

Figure 3 is an enlarged cross-sectional perspective view of a part of the CD player;

Figure 4 is a partially enlarged longitudinal cross-sectional side view of the CD player with a disc inserted thereinto;

Figure 5 is a longitudinal cross-sectional front view thereof;

Figure 6 is a cross-sectional front view thereof;

Figures 7 to 9 are rear views illustrating an example of the operational states of lock and open, and close control mechanical sections of the CD player;

Figure 10 is a plan view thereof;

Figure 11 is a side view thereof;

Figure 12 is an exploded perspective view thereof;

Figure 13 is a perspective view of an example of a disc player mechanism used in the CD player;

Figures 14A and 14B are respectively a front view and a plan view illustrating a roller mechanism section used in the CD player;

Figure 15 is a side view of an example of a drive mechanism section;

Figure 16 is a cross-sectional view taken along a line I—I in Figure 15;

Figure 17 is a cross-sectional view illustrating part of a fixed roller portion;

Figure 18 is a perspective view illustrating a chucking section;

Figures 19A and 19B are cross-sectional views used to explain the operation of the roller mechanism section; and

Figure 20 is a circuit diagram of a circuit which is used in the CD player.

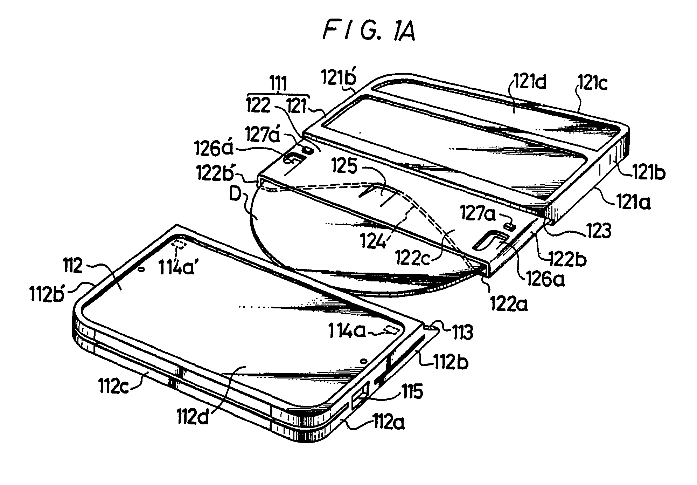

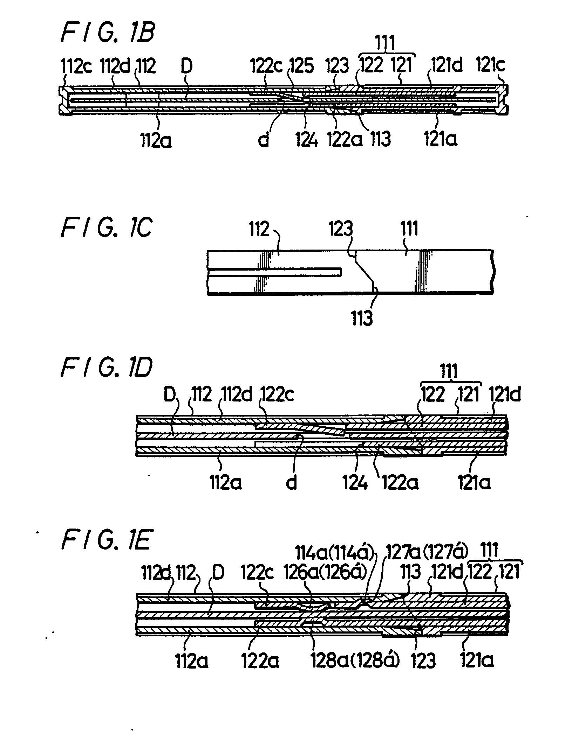

Before describing the embodiment, a disc jacket container having incorporated therein a disc which is to be loaded into a CD player will be described with reference to Figures 1A to 1E.

Figure 1A schematically illustrates the disc jacket container with a disk jacket casing (hereinafter simply referred to as a casing) 111 and a lid 112 separated from each other. The casing 111 can incorporate therein a disc D up to a little more than half the diameter of the disc D, and the lid 112 can cover the remaining portion of the disc D which protrudes from the casing 111, and can be engaged with the front edge portion of the casing 111. The casing 111 comprises an outer casing 121 formed of a bottom plate 121a, two side wall plates 121b and 121b', a rear wall plate 121c and an upper plate 121d, and a jacket or inner casing 122 formed of a bottom plate 122a, two side wall plates 122b and 122b' and an upper plate 122c. The inner casing 122 is made of a resilient material to have a width a little larger than the diameter of the disc D and is inserted at its rear half portion into the outer casing 121 and fixed thereto. Engaged into the front half portion of the inner casing 122 protruding from the outer casing 121 is the lid 112 which comprises a bottom plate 112a, two side wall plates 112b and 112b', a front wall plate 112c and an upper plate 112d.

At the front edge portion of the outer casing 121 the front edge portion of the bottom plate 121a is cut back from the front edge portion of the upper plate 121d to form a stepped portion and the front edge portions of both side wall plates 121b and 121b' are sloped to communicate with the stepped portions, thereby to form an erroneous insertion preventing stepped portion 123. In correspondence with the stepped portion 123, stepped portions 113 are formed at the rear edge portion of the lid 112. In the front half portion of the bottom plate 122a of the inner casing 122 is formed a cut-out concave portion 124 which is returned from its front edge portion and in its length direction so as to expose at least a central aperture $d$ of the disc D. At substantially the central portion of the front half portion of the upper plate 122c is cut out and formed an engaging member 125 which is engaged with the central aperture $d$ of the disc D in the direction in which the disc D is ejected. Formed at respective sides of the upper plate 122c are hold members 126a and 126a' for the disc D, which are inwardly resiliently biased and engaging convex portions 127a and 127a' which are engaged with engaging concave portions 114a and 114a' formed on the inner surface of the upper plate 112d of the lid 112. The engaging convex portions 127a and 127a' are also used for engagement with an insertion aperture portion of the CD player which will be described later. Formed on the inner surface of the bottom plate 122a are positioning convex portions 128a and 128a' for the disc D in correspondence with the hold members 126a and 126a' formed on the upper plate 122c.

In addition, engaging concave portions 115 are formed on both side wall plates 112b and 112b' of the lid 112 to facilitate removal of the lid 112 from the casing 111.

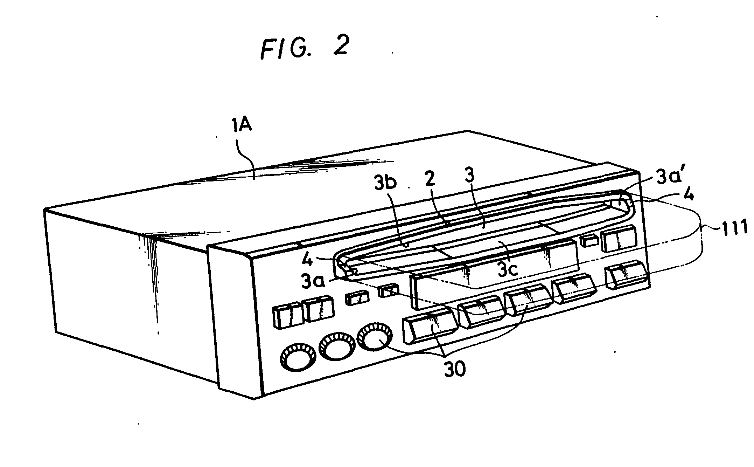

Figure 2 is a perspective view schematically illustrating an embodiment of CD player 1A according to the invention, which is installed in, for example, a car or the like, and plays back a digital audio disc. The CD player 1A is of the slot-in type and has an insertion opening frame member 2 which is engaged with the insertion opening portion of the disc D. The insertion opening frame member 2 has an inner aperture 3 which is larger than the height of the above-described disc jacket container and is centrally enlarged in the up and down direction, that is, it is of elliptical or polygonal shape. The inner peripheral surface thereof is tapered so as to be inwardly narrowed and both inner side surfaces 3a and 3a' thereof are tapered to have inclination angles larger than those of upper and lower inner surfaces 3b and 3c thereof, so as to make the width of the opening at the rear portion thereof smaller than that of the disc jacket container. In the front surface side of the insertion opening frame member 2, the lower edge end surface is protruded relative to the upper edge end surface, and both the side edge end surfaces and the side edge end surfaces thereof are sloped, thereby to form an erroneous insertion preventing stepped portion 4.

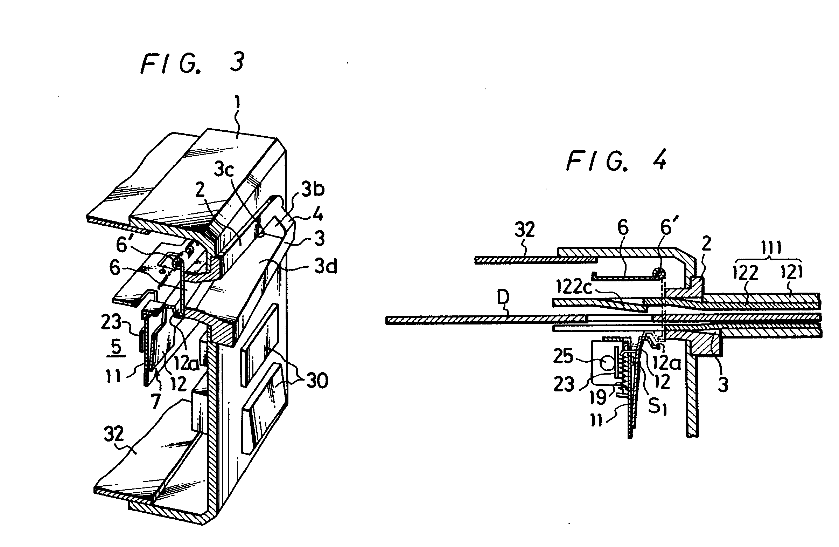

As shown in Figures 3 and 4, at the rear side of the insertion opening frame member 2 is provided a lid opening and closing apparatus 5. The apparatus 5 comprises an openable and closable lid 6, a lock mechanism 7 for locking and controlling the opening and closing of the openable and closable lid 6, and an open and close control mechanism 8. The openable and closable lid 6 is rotatably supported at its upper edge side on a shaft 6' which is extended along the rear portion of the insertion opening frame member 2. Disposed on the lower edge side of the openable and closable lid 6 are the lock mechanism 7, and the open and close control mechanism 8 which form relating members.

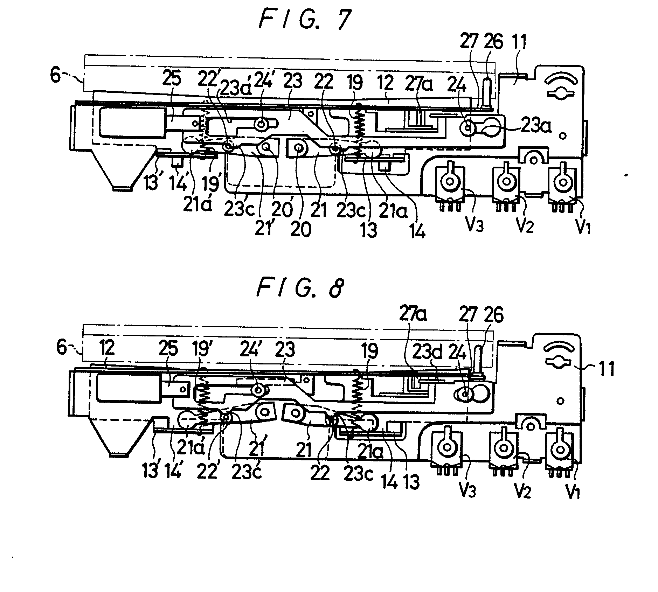

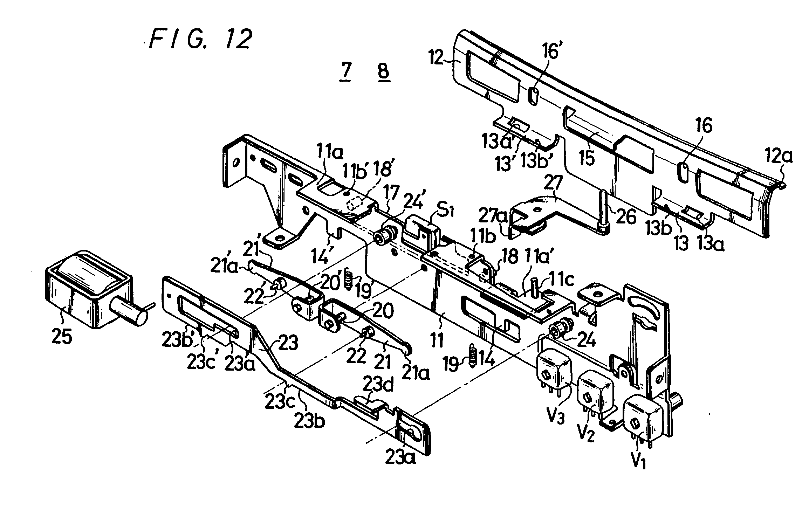

The construction of the lock mechanism 7 and the open and close control mechanism 8 will be described more fully with reference also to Figures 7 to 12.

At the front surface side of a base plate 11 which is fixed to a chassis 10 (Figure 4), there is provided a lock plate 12 the upper edge end surface of which is curved so as to be concave and which has formed on its upper edge front surface side an engaging stepped portion 12a with which the lower edge portion of the openable and closable lid 6 is engaged in the rearward direction. The lock plate 12 is provided at both its side portions of the lower edge with engaging members 13 and 13', each of which is bent backwards in the horizontal direction. Through the bent portions of these engaging piece members 13 and 13' are formed rectangular apertures 13a and 13a' which are engaged with protruded members 14 and 14' protruded downwards from the base plate 11. Substantially at the central portion of the upper portion of the lock plate 12 is formed an engaging member 15 which is bent and extended in the backward direction. Across this engaging member 15, through the lock plate 12, there are formed openings 16 and 16', each of which is extended to be long in the up and down direction. The engaging member 15 is inserted into a window aperture 17 which is formed at the upper central portion of the base plate 11, and the openings 16 and 16' are respectively engaged with receiving protrusions 18 and 18' which are protruded at the front surface of the base plate 11. Between the apertures 13b and 13b' bored through the engaging members 13 and 13' and apertures 11b and 11b' bored through an upper edge bent portion 11a of the base plate 11 are respectively stretched tension coil springs 19 and 19' by which the lock plate 12 is slidably biased upward relative to the base plate 11, and inclinedly biased forward with the lower edge engaging portion as the fulcrum while maintaining the engaged states of the engaging piece member 15 with the window aperture 17 and of the apertures 16 and 16' with the receiving protrusions 18 and 18'.

Contacted with the upper surface sides of the engaging members 13 and 13' of the lock plate 12 are free end portions 21a and 21a' of levers 21 and 21' which are symmetrically pivoted by axial pins 20 and 20' so as to be swingable at the rear surface of the base plate 11 in the up and down direction. Engaging pins 22 and 22' are respectively pivoted to the levers 21 and 21' at their intermediate portions, and the engaging protrusions 22 and 22' are slidably in contact with the lower edge of an operation plate 23 which is disposed at the rear surface side of the base plate 11.

Bored through both right and left side portions of the operation plate 23 are rectangular openings 23a and 23a' which are respectively extended in the lateral direction. The rectangular openings 23a and 23a' are respectively engaged with rollers 24 and 24' which are pivoted on the rear surface of the base plate 11 so as to be slidable in the lateral direction. Protruded portions 23c and 23c' are respectively formed on lower edge portions 23b and 23b' of the operation plate 23 at the positions corresponding to the engaging pins 22 and 22' of the swing levers 21 and 21'. The operation plate 23 is coupled to a player 25 and slid by the movement of the player 25 so that the protruded portions 23c and 23c' push the engaging pins 22 and 22' of the swing levers 21 and 21' to ride thereon thereby to swing the swing levers 21 and 21' in the lower direction.

Formed beneath one side of the upper edge bent portion 11a of the base plate 11 is an intermediate bent portion 11a' on which an axial pin 11c is mounted. Pivotably supported on the axial pin 11c is a lid opening lever 27 of substantially L-shape having mounted thereon a lid opening shaft 26 such that the lid opening lever 27 becomes rotatable with the lid opening shaft 26 being positioned in front of the openable and closable lid 6. When a contact member 27a which is bent downward and formed on the rear end portion of this lever 27 contacts with a pushing member 23d formed on the operation plate 23 and the lever 27 is rotated backward by the sliding movement of the operation plate 23, the lid opening shaft 26 pushes upwards the openable and closable lid 6 to be opened. In addition, operating volumes $V_1$, $V_2$ and $V_3$ are respectively mounted on the base plate 11.

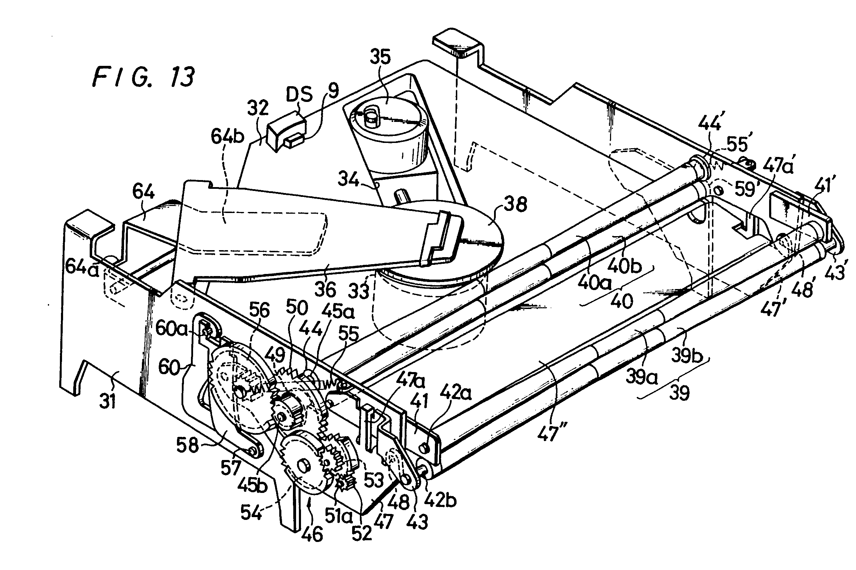

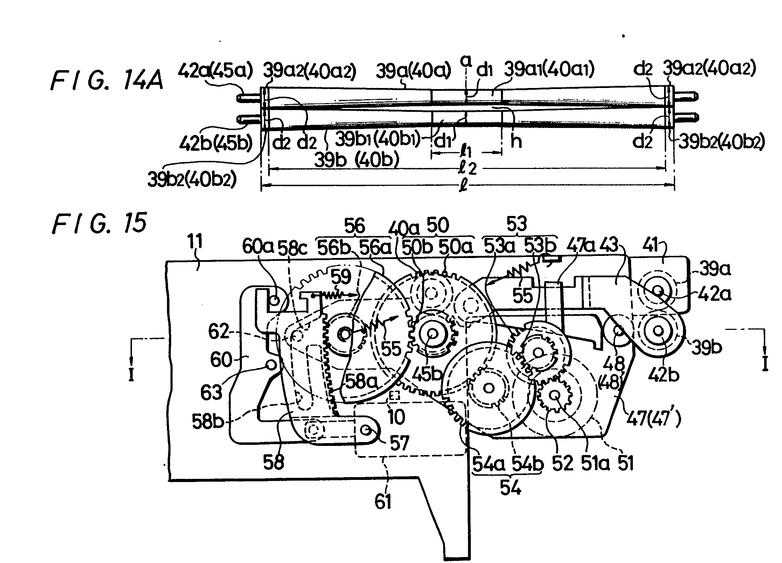

A loading apparatus as shown in Figure 13 will be described next with reference to Figures 14A, 14B and 15 to 18.

A frame 31 is installed within a casing 1 (Figure 3) and a chassis 32 is horizontally fixed to the frame 31. A spindle motor 33 is mounted on the chassis 32 at its central portion and a slit or groove 34 is formed through the chassis 32 from near one corner portion at the rear side of the chassis 32 in the central direction, namely, in the direction of the spindle motor 33. An optical pick-up device 35 is movable along the groove 34. A chucking arm 36 is rotatably supported on the chassis 32 at its other corner portion of the rear side, and the chucking arm 36 is always biased in the direction of the spindle motor 33 by a coil spring 37. Attached to the tip end portion of the chucking arm 36 is a chucking disc plate 38 so as to be freely rotatable in correspondence with the spindle motor 33. At the front edge side of the chassis 32, there are respectively mounted a guide roller mechanism 39 and a driver roller mechanism 40 with a predetermined distance therebetween in the front and rear direction for loading the disc D.

The guide roller mechanism 39 positioned at the front side comprises a fixed guide roller 39a and a movable roller 39b. The fixed guide roller 39a is pivoted through a shaft 42a to bearings 41 and 41' which are respectively fixed to the ends of the frame 31. The movable guide roller 39 is rotatably pivoted through a shaft 42b to the ends of arms 43 and 43' which are pivoted to the frame 31 to be rotatable in the up and down direction and which are always rotatably biased upward by a spring or the like. The guide rollers 39a and 39b are opposed to each other in the up and down direction while being separable. The drive roller mechanism 40, which is opposedly disposed at a predetermined spacing behind the guide roller mechanism 39 comprises a fixed roller 40a and a drive roller 40b. The fixed roller 40a is pivoted through a shaft 45a to bearings 44 and 44' fixed to the frame 31, while the drive roller 40b is supported and rotated by a roller drive mechanism 46 which is moved in the up and down direction relative to the frame 31 and moved to be separable from the fixed roller 40a. Each of the rollers 39a and 39b and 40a and 40b in the guide roller mechanism 39 and the drive roller mechanism 40 is formed such that the diameter thereof is relatively small over a central portion, then gradually increases in the directions towards each side portion and have short end portions of the same diameter at each end.

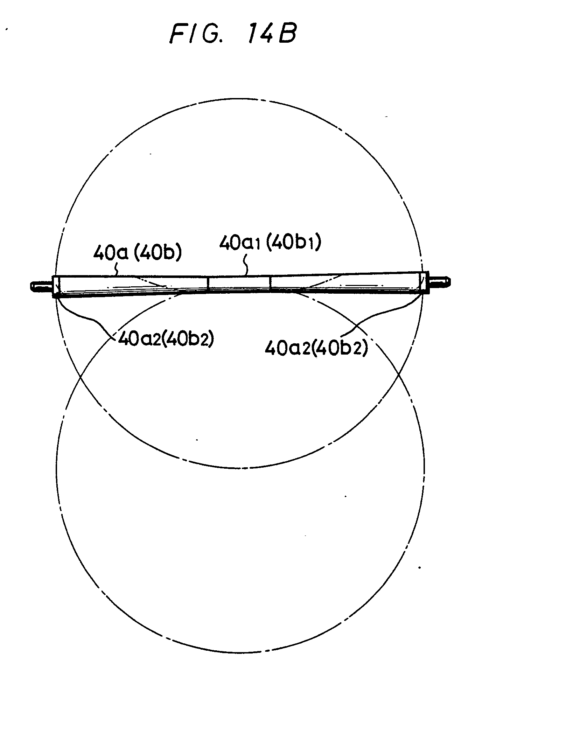

More specifically, as shown in Figures 14A and 14B, each of the rollers 39a and 39b and 40a and 40b should satisfy the following conditions. If the diameter of their central portions $39_{a1}$ and $39_{b1}$ and $40_{a1}$ and $40_{b1}$ is each taken as $d_1$ and if the diameter of both their end portions $39_{a2}$ and $39_{b2}$ and $40_{a2}$ and $40_{b2}$ is each taken as $d_2$, $d_1$ should be less than $d_2$. If the full length of each roller is taken as $l$, the length of the central portion thereof is taken as $l_1$ and the length between the outer ends of the end portions is taken as $l_2$, $l$ is greater than or equal to $l_2$ is greater than $l_1$ is greater than or equal to 0. Both the side portions of each roller must be symmetrical about a feeding centre $a$, and if the thickness of the disc D is taken as $t$, $d_2 - d_1$ is greater than or equal to $t/2$.

When the rollers 39a and 39b and 40a and 40b thus formed are respectively in contact with one another, a gap $h$ is established at the central portion thereof, and the gap tapers or becomes narrower towards each side.

The surface portion of each of the rollers 39a and 39b and 40a and 40b is made of suitable resilient material such as rubber or soft plastics material, and the shafts 42a, 42b and 45a are formed integrally with the rollers 39a, 39b and 40a or are bonded thereto so as to be rotated together. However, the shaft 45b is formed independently from the roller 40b and frictionally contacts the roller 40b so that if an excessive load is applied thereto, the shaft 45b is rotated but the roller 40b is not rotated.

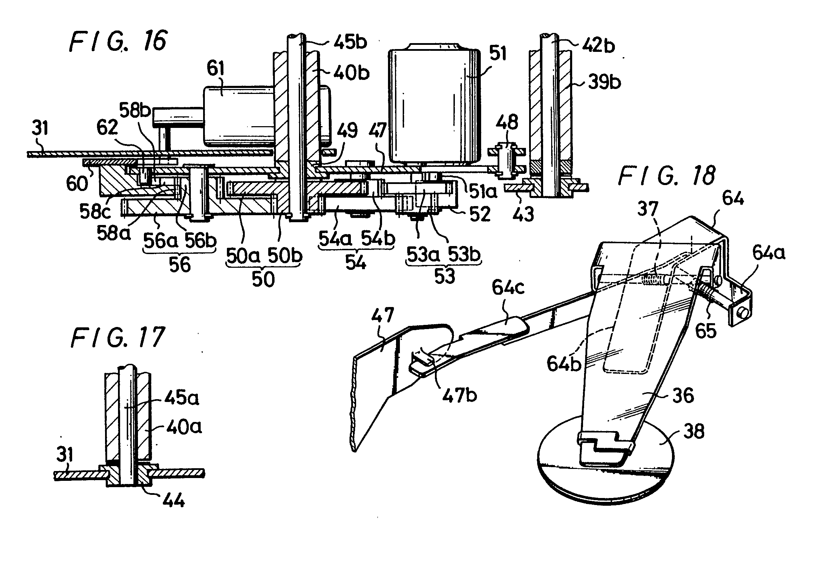

The roller drive mechanism 46 will now be described with reference to Figure 15.

Support plates 47 and 47' are pivoted to the frame 31 at both side surfaces of the front portion thereof by axial pins 48 and 48' so as to be rotatable in the up and down direction. The support plates 47 and 47' are coupled together by a connection plate 47'', and bearings 39 and 39' are respectively fixed to substantially the central portion of both the support plates 47 and 47'. Both end portions of the drive rollers 40b are respectively passed through the bearings 39 and 39' to be pivoted, and a gear 50 is fixed to one end side of the shaft 45b, namely, the protruded portion of the side pivoted to one support plate 47. The gear 50 is rotated in ganged relation with a gear 52 fixed to a shaft 51a of a motor 51 mounted on the support plate 47 and intermediate gears 53 and 54 pivoted to the support plate 47, whereby the drive force of the motor 51 is transmitted to the drive roller 40b. That is, the gear 50 fixed to the drive roller 40b (hereinafter simply referred to as to the drive gear 50) and the intermediate gears 53 and 54 respectively include large diameter tooth portions 50, 53a and 54a and small diameter tooth portions 50b, 53b and 54b, and the gear 52 attached to the shaft 51a of the motor 51 is engaged with the large diameter tooth portion 53a of the first intermediate gear 53. Then, the small diameter tooth portion 53b of the first intermediate gear 53 is engaged with the large diameter tooth portion 54a of the second intermediate gear 54 and the small diameter tooth portion 54b of the second intermediate gear 54 is engaged with the large diameter tooth portion 50a of the drive gear 50 so that the drive force is transmitted to the drive roller 40b as described above. The support plates 47 and 47' are always rotatably biased upwards by springs 55 and 55' to urge the drive roller 40b into contact with the fixed roller 40a.

Rotatably supported at the tip end of one support plate 47 is a support plate rotating gear (hereinafter referred to as the rotating gear) 56. The rotating gear 56 also includes a large diameter tooth portion 56a and a small diameter tooth portion 56b. The large diameter tooth portion 56a is engaged with the small diameter tooth portion 50b of the drive gear 50, while the small diameter tooth portion 56b thereof is engaged with a rack member 58a of a segment gear arm 58 which is rotatably supported on the frame 31 by an axial pin 57. The segment gear arm 58 is rotatably biased by a spring 59 in the direction of the small diameter tooth portion 56b of the rotating gear 56. Engaged with this segment gear arm 58 is a pin 60a protruded on one end portion of a plunger arm 60 which is rotatably pivoted to the frame 31 at its central supporting point 63. The other end of the plunger arm 60 is coupled to a plunger solenoid 61.

Formed on the inner surface side of the segment gear arm 58 is a groove 58b which extends substantially parallel to the rack member 58a. Formed from the upper portion of this groove 58b is a guide groove 58c which is widely opened in the direction of the rack member 58a, while protruding on the tip end surface of the support plate 47 is an engaging pin 62 which is slidably engaged from the guide groove 58c to the groove 58b. On the support plates 47 and 47' are formed engaging members 47a and 47a' which are respectively engaged with the upper edge sides of arms 43 and 43' to which the movable guide roller 39b is rotatably supported. The arms 43 and 43' are always rotatably biased upwards by springs so that the upper edge sides thereof are engaged with the engaging members 47a and 47a', and thereby rotatably moved downwards in association with the downward rotation of the support plates 47 and 47'. In this case, the arms 43 and 43' can be rotatably moved downwardly independently of the support plates 47 and 47'. In the condition that the support plates 47 and 47' are rotatably moved upwards, the arms 43 and 43' are respectively positioned upwards to urge the movable guide roller 39b to contact with the fixed guide roller 39a.

As shown in Figure 18, protruding from the inner surface of the tip end portion of one support plate 47 is an engaging member 47b engaged with another portion 64c of a coupling arm 64 which comprises an intermediate portion 64a pivoted to the frame 31 and one end portion 64b engaged with the lower surface of the chucking arm 36. A spring 65 rotatably biases the coupling arm 64 so as to prevent the chucking arm 36 from being rotated in the direction of the spindle motor 33 by the spring 37 which rotatably biases the chucking arm 36.

Reference DS as shown in Figure 13 designates a disc stopper, and when the disc D is horizontally inserted, the disc D comes into contact with the disc stopper DS whereby the insertion position of the disc D is determined.

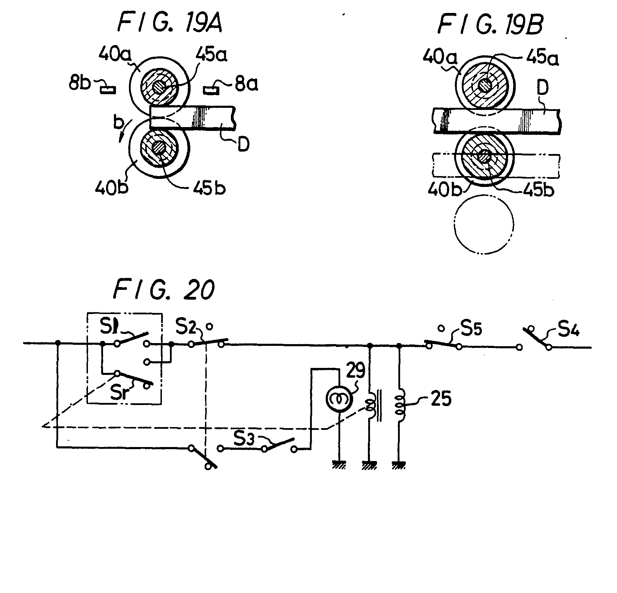

An example of the electric circuit for operating the lock mechanism 7, the open and close control mechanism 8, the loading mechanism, the disc clamp arm and the like in association with one another is constructed as, for example, shown in Figure 20. A leaf switch Sl of the plunger solenoid 25, which operates the lock mechanism 7 and the open and close control mechanism 8 when the disc D is inserted is provided at the front surface of the base plate 11. A relay switch Sr is connected in parallel with the leaf switch Sl and the operation member of the leaf switch Sl is made corresponding to the lock plate 12. Connected in series between the leaf switch Sl and the plunger solenoid 25 are a switch S2 controlled by an optical switch 9 which detects the operation of the disc loading mechanism as will be described later, and a switch S3 forming a switch 10 which detects the clamping state of the disc D on the disc table as will be described later. Connected to a connection point of the clamping state detection switch S3 is an alarm circuit 29, for example, an alarm lamp circuit or an alarm buzzer circuit. To the circuit of the plunger solenoid 25 is connected an eject switch S4 through a switch S5 which is logically controlled in cooperation with optical switches 8a and 8b which are respectively turned off when the horizontal unloading of the disc D is completed as will be described later.

In Figures 2 and 3, reference numeral 30 designates an operation member of the disc player 1A.

The operation for loading the disc D, which is incorporated in the disc jacket container, onto the disc player thus constructed will now be described.

With the disc D accommodated in the disc jacket container, the disc D is inserted into the inner casing 122 of the casing 111, its central aperture *d* is exposed through the cut-out concave portion 124 and engaged with the engaging member 125 in the eject direction. Both side portions of the disc D are respectively gripped by the pushing members 126a and 126a' and the positioning convex portions 128a and 128a', so the disc D is positioned with the peripheral edge thereof remote from the inner surfaces of the side wall plates 122b and 122b' of the inner casing 122. Accordingly, the disc D is held in the casing 111 and prevented from being taken out of the casing 111 or being shaken therein. In this state, the lid 112 is engaged with the casing 111. To be more precise, the lid 112 is engaged with the inner casing 122 at its front half portion protruded from the outer casing 121 whereby the engaging concave portions 114a and 114a' of the lid 112 are respectively engaged with the engaging convex portions 127a and 127a' of the inner casing 122, and the stepped portion 113 of the rear edge portion of the lid 112 is engaged with the erroneous insertion preventing stepped portion 123 of the outer casing 121.

When the disc D in the disc jacket container as described above is loaded onto the CD player 1A, the lid 112 is removed from the casing 111, so that a part of the disc D is protruded from the front edge of the casing 111, namely the front edge of the inner casing 121, and it is inserted into the insertion opening 2 of the player 1A. Then, the front edge end of the disc D contacts the openable and closable lid 6 and pushes it inwardly. As a result, the openable and closable lid 6 is rotated a little about the shaft supporting portion by the upper edge shaft 6', and in association with the rotation of the lid 6, the lock plate 12 of the lock mechanism 8 engaged with the openable and closable lid 6 is swung towards the base plate 11. When the lock plate 12 is swung in this way, the leaf switch Sl is switched on to operate the plunger solenoid 25, whereby the operation plate 23 is slidably moved to ride the protruded portions 23c and 23c' of the lower edge portions 23b and 23b' on the engaging protrusions 22 and 22' of the levers 21 and 21'. Thus both the levers 21 and 21' are swung downwards.

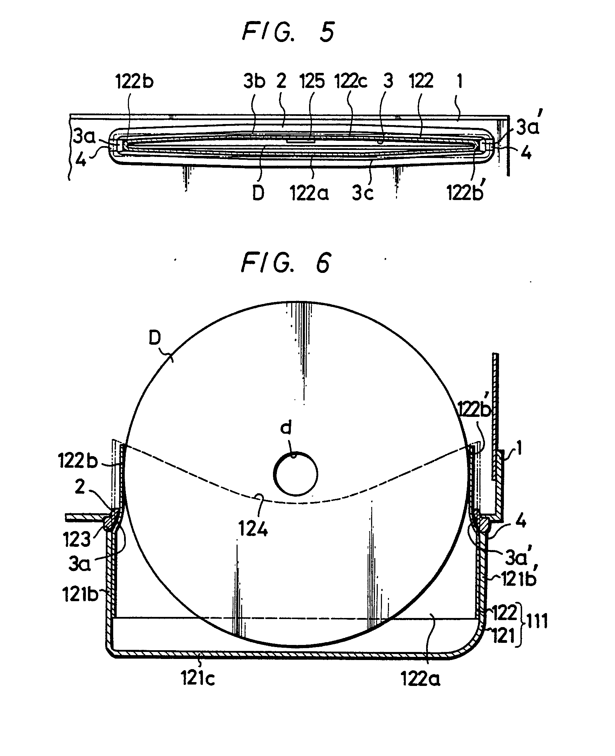

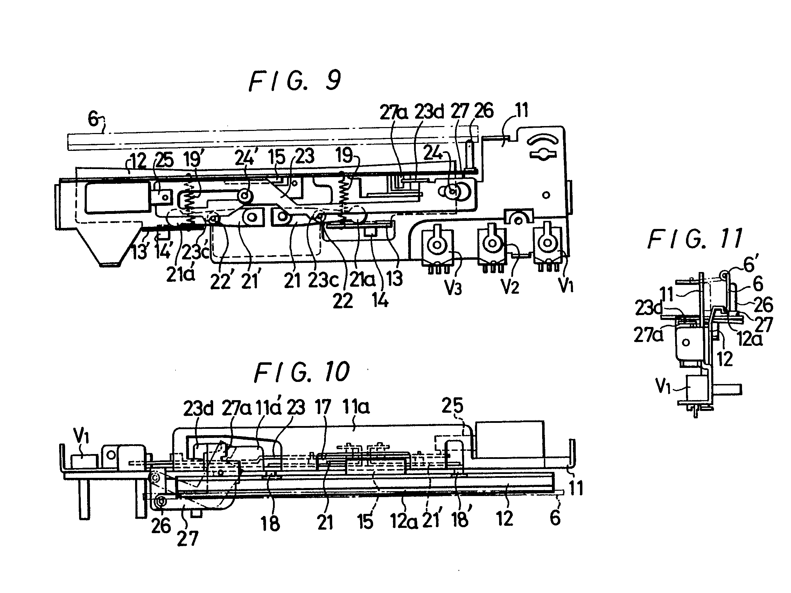

When the levers 21 and 21' are swung downwards, the lock plate 12 is lowered through the lower edge engaging piece members 13 and 13' against the biasing force of the coil springs 19 and 19' so that the lock plate 12 is disengaged from the openable and closable lid 6 to allow the lid 6 to rotate freely to open and close (Figure 8). Thereafter, when the operation plate 23 is further slidably moved by the stroke of the plunger solenoid 25, the pushing member 23d pushes the contact member 27a of the lid opening lever 27 to rotate the lid opening lever 27, whereby the lid opening shaft 26 which is mounted on the free end of the lid opening lever 27 pushes the openable and closable lid 6 at its front surface to rotate it upwards (Figure 7). Thus, the insertion opening portion, namely, the inner opening portion 3 of the insertion opening frame member 2 is opened so that as shown in Figures 4, 5 and 6, not only the protruded portion of the disc D from the casing 111 becomes able to be inserted into the opening portion of this insertion opening frame member 2, but also the inner casing 122 becomes able to be inserted thereinto.

However, since the central portion of the inner opening portion 3 of the insertion opening frame member 2 is larger than the height of the inner casing 122 and the rear opening portion thereof is made narrow in width, when the inner casing 122 is inserted into the insertion opening frame member 2, the inner casing 122 is pushed at both sides by both the inner side surfaces 3a and 3a' of the inner opening portion 3 so that its upper plate 122c and bottom plate 122a are deformed to be enlarged in the up and down direction. In association therewith, the engaging member 125 formed on the upper plate 122c of the inner casing 122 is moved upwards and becomes remote from the central aperture *d* of the disc D, while the pushing members 126a and 126a' are slightly moved upwards, so the pushing force thereof against the disc D is weakened.

In this state, since the protruded portions 23c and 23c' of the operation plate 23 are respectively disengaged from the engaging protrusions 22 and 22' of the levers 21 and 21', and the levers 21 and 21' are inhibited from being swung, the lock plate 12 is released from being pushed downward, raised by the biasing force of the springs 19 and 19' and then returned forward. As a result, although the leaf switch Sl is turned off, the relay switch Sr which is connected in parallel with the leaf switch Sl remains in the on state, so that the plunger solenoid 25 is operated to hold the openable and closable lid 6 in the opened state.

While, when the leaf switch Sl is switched on and then the plunger solenoid 61 is driven, the plunger arm 60 is rotated and the segment gear arm 58 is rotated against the biasing force of the spring 59 in the direction to become remote from the support plate 47, whereby the engagement between the small diameter tooth portion 56b of the rotating gear 56 of the support plate 47 and the rack member 58a is broken and they are held in this state.

When the disc D is inserted and contacts the rollers 39a and 39b of the guide roller mechanism 39, the movable guide roller 39b is moved downwards through the arm 43 to widen the spacing between the rollers 39a and 39b so that the disc D is gripped by both the rollers 39a and 39b. Then, when the disc D passes through the guide roller mechanism 39 and arrives at the rollers 40a and 40b of the drive roller mechanism 40 (Figure 19A), an optical switch, namely, a photo reflector 8a which is disposed in front of the drive roller 40a is turned on to allow the motor 51 to rotate in the positive direction. The drive force of the motor 51 is transmitted through the gear 52 fixed to the motor shaft 51a and the intermediate gears 53 and 54 to the gear 50 fixed to the shaft 45b of the drive roller 40b, whereby the drive roller 40b is rotated in the direction in which the disc D is moved forward (in the direction shown by an arrow *b* in Figure 19A) so that in the state that the drive roller 40b is slightly moved downward against the biasing force of the spring 55 of the support plate 47, the disc D is gripped by the drive roller 40b and the fixed roller 40a, and moved to a position at which the disc D comes into contact with the disc stopper DS (Figure 19B). In this state, the free end of the disc D is detected by an optical switch, namely, a photo reflector 9 which is disposed in the inner end portion of the chassis 32, and hence the circuit of the plunger solenoid 61 is turned off. As a result, the plunger arm 60 is rotatably returned and the segment gear arm 58 is returned by the biasing force of the spring 59 so that its rack member 58a is engaged with the small diameter tooth portion 56b of the rotating gear 56.

Therefore, due to the rotational force transmitted from the drive roller gear 50 and the rotating gear 56, the support plate 47 begins rotatably to move downward around the axial pin 48 against the upward biasing force of the spring 55. During a period in which the support plate 47 is being rotatably moved downward, since the engaging protrusion 62 is engaged with the guide groove 58b, the segment gear arm 58 is prevented from being made remote from the small diameter tooth portion 56b. Moreover, since the engaging member 47b of the support plate 47 is put in contact with the other end portion 64c of the coupling arm 64 by the spring 65, the coupling arm 64 is rotatably moved downward as the support plate 47 is rotatably moved downward. Consequently, the chucking arm 36 is moved by the biasing force of the spring 37 to urge the chucking disc plate 38 mounted on the free end portion thereof to correspond to the central portion of the disc D. In this case, the drive roller 40b, while continuing its rotation, is moved downward as the support plate 47 is rotatably moved downward, and the guide roller 39b is also moved downward as the arm 43 is moved downward together with the support plate 47 through the engaging piece member 47a. Thus, the disc D is moved downward and located on a disc table (not shown) which is disposed on the spindle motor 33. In addition, the top end of a spindle shaft, which is formed as a truncated cone, is engaged into the central aperture *d* of the disc D and the central portion of the disc D is pushed by the chucking disc plate 18, thus ensuring that the disc D is held.

When the support plate 47 is rotated downward to the chucking operation completion position, an appropriate spacing is produced in the engagement portion between the chucking arm 36 and the other end portion 64c of the coupling arm 64 and the drive roller 40b and the movable guide roller 20b are rotatably lowered so as to become spaced from the lower surface of the disc D, a loading completion switch 10 (Figure 15) is operated to stop the motor 51 from rotating.

As described above, when the loading has been completed, the disc D is chucked on the disc table attached to the spindle motor 33 by the chucking disc plate 38 of the chucking arm 36 and the drive roller 40b and the movable guide roller 39b are lowered to be spaced from the lower surface of the disc D, whereby the disc D can be reproduced by the optical pick-up device 35. In this state, it is possible that the casing 111 remains in the insertion opening frame member 2 or that the casing 111 is removed therefrom after the disc D has been loaded.

When the disc D is to be ejected from its chucking state, the eject operation button is depressed to cause the motor 51 to be rotated in the reverse direction, so that operations opposite to the chucking operations are carried out.

That is, when the motor 51 is rotated in the reverse direction, the drive roller 40b is rotated in the reverse direction and the rotating gear 56 attached to the support plate 47 is also rotated in the reverse direction. Thus, the small diameter tooth portion 56b of the gear 56 is rotated in the reverse direction relative to the rack member 58a of the segment gear arm 58 so that the support plate 47 is rotatably moved upward around the shaft supporting portion. Accordingly, in association with this operation, the coupling arm 64 is released from the pushing-down force exerted by the engaging member 47b of the support plate 47 and is rotatably moved upwards by the biasing force of the spring 65. In consequence, the chucking arm 36 rises against the biasing force of the spring 37 at the shaft supporting portion and the chucking disc plate 38 is moved away from the upper surface of the disc D. On the other hand, the drive roller 40b is being rotated in the reverse direction and moved upward through the support plate 47 so as to push the disc D upwards, so that the disc D is again gripped by the drive roller 40b and the fixed roller 40a. Moreover, in this case, since the movable guide roller 39b of the guide roller mechanism 39 is released from being lowered by the arm 43 supported by the support plate 47, the movable guide roller 39b is moved upwards by the biasing force of the spring and contacts the fixed guide roller 39a.

As described above, when the support plate 47 is rotatably moved upward to the predetermined position, the disc D is moved forward by the drive roller 40b and made away from the switch 9 which is disposed in the inner end portion of the chassis 32, the switch 9 is turned on to operate the plunger solenoid 61 and hence the plunger arm 60 is rotated thereby to rotate the segment gear arm 58 against the biasing force of the spring 59 in the direction away from the support plate 47, and thus the rack member 58a thereof is moved away from the small diameter tooth portion 56b of the rotating gear 56. As a result, the support plate 47 becomes free to rotate and both the support plates 47 and 47′ are integrally and rotatably moved upwards through the coupling plate 47″ by the biasing force of the springs 55 and 55′, so that the disc D is gripped by the drive roller 40b and the fixed roller 40a. Thus, since the drive roller 40b is reversed in its rotation, the disc D is moved in the direction towards the insertion opening 2 through the guide rollers 39a and 39b.

When the disc D is moved to the predetermined position, the motor 51 is turned off by the optical switch, namely, the photo reflector 8b, and by the logical outputs from the switches 8a and 8b, so the movement of the disc D is stopped. At the same time, the plunger solenoid 61 is made inoperative and the plunger arm 60 is rotatably returned, whereby the segment gear arm 58 is rotated by the biasing force of the spring 59 in the direction of the support plate 47 and the rack member 58a is engaged with the small diameter tooth portion 56b of the rotating gear 56 and then returned to the original state.

In the above operation, when the support plate 47 is rotated upwards by the engagement between the small diameter tooth portion 58b of the rotating gear 56 and the rack member 58a of the segment gear arm 58, the pin 62 of the support plate 47 is slidably moved within the groove 58b of the segment gear arm 58 and so, in the state that the support plate 47 is rotatably moved up to the upper portion, the pin 62 is opposed to the guide groove 58c. In this state, when the plunger solenoid 61 is operated, the segment gear arm 58 is rotated through the plunger arm 60 in the direction away from the support plate 47, thus the engagement of the rack member 58a with the small diameter tooth portion 56b of the rotating gear 56 is released.

In this embodiment, since the guide roller mechanism 39 is used merely to maintain the orientation of the disc D, the guide roller mechanism 39 can be replaced with some other suitable guide mechanism, such as a plate, with a similar action and effect being achieved.

The lock mechanism 7 and the open and close control mechanism 8 will now be further described with reference to the circuit diagram of Figure 20.

When the disc D is horizontally moved by the loading operation and this movement is completed, the completion of the movement of the disc D is detected by the switch S2 which is controlled by the optical switch 9. By the switch S2, the circuit of the plunger solenoid 25 is turned off to cause the plunger solenoid 25 to be set in the inoperative mode. Then, the disc D is moved downward and then loaded on the disc table. In this case, when the plunger solenoid 25 is changed in mode to be inoperative, the operation plate 23 is turned to the original position and the rotational movement of the lid opening lever 27 is released so that the openable and closable lid 6 is rotatably moved in the direction in which the lid 6 is closed, or in the lowering direction, in association with the return movement of the operation plate 23, and comes into contact with the upper plate 121d of the casing 111 of the disc D. While, when the casing 111 is taken out from the CD player 1A, the lower edge portion of the lid 6 comes into contact with the rear surface side of the upper edge of the lock plate 12 which has already been returned upward.

However, when the operation plate 23 is returned, the levers 21 and 21′ are respectively pushed again by the lower edge protruded portions 23c and 23c′ through the engaging pins 22 and 22′, and swung downwards thereby to lower the lock plate 12, so that the openable and closable lid 6 is overshot through the lock plate 12 and then rotated to the front side. In this state, when the lock plate 12 is released from being pushed down by overshooting the protruded portions 23b and 23b′ of the operation plate 23 through the engaging protrusions 22 and 22′ of the levers 21 and 21′ and moved upward again, the engaging stepped portion 12a formed on the upper edge of the lock plate 12 is engaged with the lower edge of the openable and closable lid 6, so the lid 6 is locked.

On the other hand, the disc D loaded on the disc table is pressed and held by a disc clamp (not shown) which is provided on a disc clamp arm (not shown). When the disc D is pressed and held by the disc clamp, the movable contact of the switch S3 which forms the operation switch 10 is changed in position to the side of the alarm circuit 29, wherein an alarm lamp or buzzer (not shown) is operated to prevent double loading of the disc D. Morover, in this case, since the switches S2 and S3 are respectively turned off, even if the openable and closable lid 6 is pressed and the lock plate 12 is rotatably swung thereby to run the switch SI on, the plunger solenoid 25 is not operated, so that the lock plate 12 holds the openable and closable lid 6 in the locked state.

When the disc D has been placed in accordance with the above operation and the disc D is ejected from the CD player 1A after the playing has ended, an eject button is depressed to make the eject switch S4, on, thereby to operate the plunger solenoid 25, so that the openable and closable lid 6 is opened similarly as above.

In this state, the disc D is lifted up from the disc table and moved in the direction of the opening portion of the CD player 1A by the disc loading mechanism, or unloaded and inserted from the inside to the inner opening 3 of the insertion opening frame member 2. In this case, if the casing 111 is inserted into the insertion opening frame member 2, the disc D is inserted in to this casing 111. Accordingly, as described above, when the unloading operation is completed, the unloading completion detection switch S5 which is logically controlled in cooperation with the optical switches 8a and 8b is turned off to set the plunger solenoid 25 in the inoperative mode, so the openable and closable lid 6 is closed.

Moreover, even when the rear end portion of the disc D is held between the openable and closable lid 6 and the lock plate 12, due to deviation in timing of the lid closing operation, the lid 6 merely comes into contact with the disc D under its own weight. Also, since the upper edge end surface of the lock plate 12 is formed only as a concave and curved shape, the upper edge end surface of the lock plate 12 merely contacts the peripheral edge of the disc D and does not damage the recording surface of the disc D.

In the above operation, when the casing 111 is inserted upside down into the insertion opening frame member 2 of the disc player 1A, or erroneously inserted thereinto, the front edge end of the upper plate 121c of the outer casing 121 comes into contact with the lower side front surface of the insertion opening frame member 2, namely, the erroneous insertion preventing stepped portion 123 of the casing 111, and the erroneous insertion preventing stepped portion 4 of the insertion opening frame member 2 contact with each other, so that the front end portion of the inner casing 122 never reaches the predetermined position. An insertion detecting switch (not shown) is disposed at this predetermined position. Thus if the casing 111 is inserted upside down into the insertion opening frame member 2 of the CD player 1A, then on the basis of the logical output resulting from the fact that the tip end of the disc D never reaches the optical switch 8a and this insertion detecting switch, the loading of the disc D by the motor 51 and the plunger solenoid 61 is inhibited.

When the casing 111 is taken out from the insertion opening frame member 2 before the playback of the disc D has ended, or when upon loading, the disc D is taken out from the casing 111, inserted into the insertion opening frame member 2 directly by hand for loading and thereafter the casing 111 which is upside down is inserted thereinto, then on the basis of the logical outputs derived from the detecting switch 10 which detects whether the disc D is loaded on the disc table and the insertion detecting switch, the unloading of the disc D by the motor 51 and the plunger solenoid 61 is inhibited.

## Claims

1. A disc player (1A) in which a disc (D) inserted into an insertion opening (2) at the front of the disc player (1A) is gripped by an upper and a lower roller (40a, 40b) at least one of which is driven by a drive source (51) to locate said disc (D) on a disc table (38); characterised in that:

each said roller (40a, 40b) is of relatively small diameter at its central portion and of gradually increasing diameter towards each end thereof;

said upper roller (40a) is supported by a chassis (10) and said lower roller (40b) is rotatably attached to a support plate (47, 47', 47'') which is rotatably supported by said chassis (10) and biased so as to bias said lower roller (40b) towards said upper roller (40a);

a drive motor (51) forms said drive source (51) for rotatably driving said lower roller (40b) and is attached to said support plate (47, 47', 47''); and

a separable member (58a) is provided on said chassis (10) and is controlled by an electromagnetic means (61) to have a first state in which said separable member (58a) contacts a rotating member (56) which is pivoted to said support plate (47, 47', 47'') and rotated by said motor (51) such that rotation of said rotating member (56) causes a translating movement of said separable member (58a) in order to raise or lower said support plate (47, 47', 47''), and a second state in which said separable member (58a) is separated from said rotating member (56).

2. A disc player (1A) according to claim 1 wherein said electromagnetic means (61) actuates said separable member (58a) to contact said rotating member (56) when said disc (D) is just about to arrive above said disc table (38) upon loading of said disc (D), and to separate from said rotating member (56) just after the starting of unloading of said disc (D); and

wherein in said first state the separation of said rotating member (56) and said separable member (58a) allows biasing of said upper and lower rollers (40a, 40b) towards each other so as to enable said drive motor (51) to transfer said disc (D) into or out of said disc player (1A) by driving said lower roller (40b), and in said second state the rotation of said drive motor (51) causes said support plate (47, 47', 47'') to be raised or lowered depending upon the direction of rotation of said drive motor (51) and thus depending on whether said disc (D) is being unloaded or loaded, in order to unload or load said disc (D) from or upon said drive table (38).

3. A disc player according to claim 1 or claim 2 wherein each of said rollers (40a, 40b) is formed as a tapered-shape and the diameter thereof becomes gradually larger from a constant diameter central portion in the directions of both ends thereof.

4. A disc player according to claim 1, claim 2 or claim 3 wherein said rotating member (56) rotated by said motor (51) is a gear (56) and said separable member (58a) is a rack (58a).

5. A disc player according to any one of the preceding claims wherein at least one (40b) of said rollers (40a, 40b) comprises a rotary shaft (45b) and a resilient member (40b) attached to said rotary shaft (45b).

6. A disc player according to claim 5 wherein said rotary shaft (45b) and said resilient member (40b) are frictionally engaged with each other and are arranged to slip relatively when an excessive load is applied thereto.

7. A disc player according to any one of the preceding claims wherein said separable member (58a) has formed thereon an engaging groove (58c) which is engaged with an engaging portion (62) formed on said support plate (47, 47', 47'') when said separable member (58a) contacts said rotating member (56), and said separable member (58a) is biased by spring means in the direction in which said separable member (58a) is engaged with said rotating member (56).

8. A disc player according to any one of the preceding claims wherein an openable and closable lid (6) is provided for opening and closing said insertion opening (2) formed at said front of said disc player (1A), and a lock mechanism (7) is provided for rotatably supporting said openable and closable lid (6) and locking said openable and closable lid (6) at a closed position, said lock mechanism (7) releasing its locking state on the basis of an operation of a plunger solenoid (25) which is operated by a switch (SI) responsive to movement of said openable and closable lid (6) when pushed by the insertion of said disc (D).

9. A disc player according to claim 8 wherein said openable and closable lid (6) is opened and closed by an operation of said plunger solenoid (25).

10. A disc player according to claim 6 or claim 7 wherein said switch (SI) is controlled by a lock member of said lock mechanism (7) and which is rotated slightly when said openable and closable lid (6) is slightly rotated by said disc (D).

**Patentansprüche**

1. Plattenspieler (1A), in dem eine Platte (D), die in eine an der Frontseite des Plattenspielers (1A) vorhandene Einführungsöffnung (2) eingeführt wird, von einer oberen und einer unteren Rolle (40a, 40b) ergriffen und von diesen auf einem Plattenteller (38) angeordnet wird, wobei wenigstens eine der beiden Rollen (40a, 40b) von einer Antriebsquelle (51) angetrieben wird, dadurch gekennzeichnet,

daß der Durchmesser jeder der Rollen (40a, 40b) im zentralen Bereich der Rolle relativ klein ist und in Richtung auf die beiden Enden der Rolle allmählich zunimmt,

daß die obere Rolle (40a) von einem Chassis (10) getragen und die untere Rolle (40b) drehbar an einer Trägerplatte (47, 47', 47'') befestigt ist, die an dem Chassis (10) drehbar gelagert und derart vorgespannt ist, daß sie die untere Rolle (40b) gegen die obere Rolle (40a) vorspannt, daß die Antriebsquelle (51) aus einem an der Trägerplatte (47, 47', 47'') befestigten Antriebsmotor (51) zum Drehen der unteren Rolle (40b) besteht,

und daß an dem Chassis (10) ein lösbares Teil (58a) angebracht ist, das von einer elektromagnetischen Vorrichtung (61) so steuerbar ist, daß es entweder einen ersten Zustand einnimmt, in dem es mit einem rotierenden Teil (56) in Kontakt steht, das mit der Trägerplatte (47, 47', 47'') schwenkbar verbunden ist und von dem Antriebsmotor (51) so gedreht wird, daß seine Drehbewegung eine Translationsbewegung des lösbaren Teils (58a) bewirkt, durch die die Trägerplatte (47, 47', 47'') angehoben oder abgesenkt wird, oder einen zweiten Zustand, in dem das lösbare Teil (58a) von dem rotierenden Teil (56) gelöst ist.

2. Plattenspieler (1A) nach Anspruch 1, bei dem die elektromagnetische Vorrichtung (61) das lösbare Teil (58a) so antreibt, daß es mit dem rotierenden Teil (56) in Kontakt ist, wenn die Platte (D) beim Ladevorgang gerade über dem Plattenteller (38) ankommt, und daß es von dem rotierenden Teil (56) unmittelbar nach Beginn der Ausladens der Platte (D) getrennt wird,

und bei dem in dem genannten ersten Zustand des Trennen des rotierenden Teils (56) und des lösbaren Teils (58a) ein Vorspannen der oberen und der unteren Rolle (40a, 40b) gegeneinander ermöglicht, wodurch der Antriebsmotor (51) in die Lage versetzt wird, durch Antreiben der unteren Rolle (40b) die Platte (D) in den Plattenspieler (1A) hinein- oder aus ihm herauszuführen, während in dem zweiten Zustand das Drehen des Antriebsmotors (51) in Abhängigkeit von der Drehrichtung und damit in Abhängigkeit davon, ob die Platte (D) gerade ausgegeben oder geladen wird, ein Anheben oder Absenken der Trägerplatte (47, 47', 47'') bewirkt, um die Platte (D) von dem Plattenteller (38) abzunehmen oder auf ihn zu laden.

3. Plattenspieler (1A) nach Anspruch 1 oder 2, bei dem die Rollen (40a, 40b) konusförmig ausgebildet sind und in ihrem zentralen Bereich einen konstanten Durchmesser haben, der in Richtung auf ihre beiden Enden allmählich zunimmt.

4. Plattenspieler (1A) nach Anspruch 1, 2 oder 3, bei dem das von dem Antriebsmotor (51) angetriebene rotierende Teil (56) ein Zahnrad (56) und das lösbare Teil (58a) eine Zahnstange (58a) sind.

5. Plattenspieler (1A) nach einem der vorhergehenden Ansprüche, bei dem wenigstens eine (40b) der Rollen (40a, 40b) eine Drehwelle (45b) und ein an dieser befestigtes elastisches Teil (40b) umfaßt.

6. Plattenspieler (1A) nach Anspruch 5, bei dem die Drehwelle (45b) und das elastische Teil (40b) über Reibungsschluß miteinander gekuppelt und so angeordnet sind, daß ein relativer Schlupf entsteht, wenn eine übergroße Belastung auf sie einwirkt.

7. Plattenspieler (1A) nach einem der vorhergehenden Ansprüche, bei dem an dem lösbaren Teil (58a) eine Mitnehmernut (58c) ausgebildet ist, die mit einem an der Trägerplatte (47, 47', 47'') vorgesehenen Kupplungsteil (62) in Eingriff kommt, wenn das lösbare Teil (58a) mit dem rotierenden Teil (56) in Kontakt steht, und bei dem das lösbare Teil (58a) durch federnde Mittel in der Richtung vorgespannt ist, in der es mit dem rotierenden Teil (56) in Eingriff steht.

8. Plattenspieler (1A) nach einem der vorhergehenden Ansprüche, bei dem ein bewegliches Deckelteil (6) zum Öffnen und Schließen der an der Frontseite des Plattenspielers (1A) vorgesehenen Einführungsöffnung (2) sowie ein Verrieglungsmechanismus (7) zur schwenkbaren Lagerung und zur Verriegelung des beweglichen Deckteils (6) in Schließposition vorgesehen sind, und bei dem der Verriegelungszustand des Verriegelungsmechanismus (7) durch die Betätigung eines Tauchkolben - Elektromagneten (25) aufhebbar ist, der durch einen Schalter (SI) aktivierbar ist, der auf die Bewegung des bewegliches Deckelteils (6) anspricht, wenn dieses durch das Einführen der Platte (D) angestoßen wird.

9. Plattenspieler (1A) nach Anspruch 8, bei dem das bewegliche Deckelteil (6) durch Betätigen des Tauchkolben - Elektromagneten (25) geöffnet und geschlossen wird.

10. Plattenspieler (1A) nach Anspruch 6 oder 7, bei dem der genannte Schalter (SI) durch ein Verriegelungsglied des Verriegelungsmechanismus (7) gesteuert wird, das eine kleine Drehbewegung ausführt, wenn das bewegliche Deckelteil (6) von der Platte (D) geringfügig verschwenkt wird.

**Revendications**

1. Lecteur de disque (1A) dans lequel un disque (D) introduit dans une ouverture (2) d'introduction formée à l'avant du lecteur de disque (1A) est serré par un rouleau supérieur et un rouleau inférieur (40a, 40b) dont l'un au moins est entraîné par une source motrice (51) afin que le disque (D) soit positionné sur une platine (38), caractérisé en ce que

chaque rouleau (40a, 40b) a un diamètre relativement petit dans sa partie centrale et un diamètre croissant progressivement vers ses deux extrémités,

le rouleau supérieur (40a) est supporté par un châssis (10) et le rouleau inférieur (40b) est supporté par une plaque de support (47, 47', 47'') afin qu'il puisse tourner, cette plaque étant supportée par le châssis (10) afin qu'elle puisse tourner et étant rappelée de manière que le rouleau inférieur (40b) soit rappelé vers le rouleau supérieur (40a),

un moteur (51) forme la source motrice (51) destinée à entraîner en rotation le rouleau inférieur (40b) et est fixé à la plaque de support (47, 47', 47''), et

un organe séparable (58a) est placé sur le châssis (10) et est commandé par un dispositif électromagnétique (61) afin qu'il prenne un premier état dans lequel l'organe séparable (58a) est au contact d'un organe rotatif (56) qui peut pivoter sur la plaque de support (47, 47', 47'') et qui est entraîné en rotation par le moteur (51) de manière que la rotation de l'organe rotatif (56) provoque un mouvement de translation de l'organe séparable (58a) et provoque le soulèvement ou l'abaissement de la plaque de support (47, 47', 47''), et un second état dans lequel l'organe séparable (58a) est séparé de l'organe rotatif (56).

2. Lecteur de disque (1A) selon la revendication 1, dans lequel le dispositif électromagnétique (61) commande l'organe séparable (58a) afin qu'il soit au contact de l'organe rotatif (56) lorsque le disque (D) est juste sur le point d'arriver audessus de la platine (38) lors du chargement du disque (D), et qu'il se sépare de l'organe rotatif (56) juste après le début du déchargement du disque (D), et

dans lequel, dans le premier état, la séparation de l'organe rotatif (56) et de l'organe séparable (58a) permet le rappel des rouleaux supérieur et inférieur (40a, 40b) l'un vers l'autre afin que le moteur (51) puisse transférer le disque (D) dans le lecteur de disque (1A) ou hors de celui-ci par entraînement du rouleau inférieur (40b), et, dans le second état, la rotation du moteur (51) provoque le soulèvement ou l'abaissement de la plaque de support (47, 47', 47'') suivant le sens de rotation du moteur (51) et ainsi selon que le disque (D) est en cours de déchargement ou de chargement, afin que le disque (D) soit déchargé de la platine (38) ou chargé sur celle-ci.

3. Lecteur de disque selon la revendication 1 ou 2, dans lequel chacun des rouleaux (40a, 40b) a une forme et des dimensions variant progressivement et son diamètre augmente progressivement d'une partie centrale de diamètre constant vers les deux extrémités.

4. Lecteur de disque selon la revendication 1, 2 ou 3, dans lequel l'organe rotatif (56) entraîné en rotation par le moteur (51) est un pignon (56) et l'organe séparable (58a) est une crémaillère (58a).

5. Lecteur de disque selon l'une quelconque des revendications précédentes, dans lequel l'un au moins (40b) des rouleaux (40a, 40b) a un arbre rotatif (45b) et un organe élastique (40b) fixé à l'arbre rotatif (45b).

6. Lecteur de disque selon la revendication 5, dans lequel l'arbre rotatif (45b) et l'organe élastique (40b) coopèrent par friction l'un avec l'autre et sont destinés à glisser l'un par rapport à l'autre lorsqu'une force excessive leur est appliquée.

7. Lecteur de disque selon l'une quelconque des revendications précédentes, dans lequel l'organe séparable (58a) a une gorge de coopération (58c) qui est au contact d'une partie de coopération (62) formée sur la plaque de support (47, 47', 47'') lorsque l'organe séparable (58a) est au contact de l'organe rotatif (56), et l'organe séparable (58a) est rappelé par un dispositif à ressort dans le sens dans lequel l'organe séparable (58a) est au contact de l'organe rotatif (56).

8. Lecteur de disque selon l'une quelconque des revendications précédentes, dans lequel un couvercle (6) qui peut être ouvert et fermé est disposé afin qu'il ouvre et ferme l'ouverture d'introduction (2) formée à l'avant du lecteur de disque (1A), et un mécanisme de blocage (7) est destiné à supporter le couvercle (6) afin qu'il permette sa rotation et à le bloquer en position de fermeture, le mécanisme de blocage (7) quittant sont étant de blocage à la suite du fonctionnement d'un électro-aimant (25) qui est commandé par un commutateur (SI) sensible au déplacement du couvercle (6) lorsque celui-ci est poussé à la suite de l'introduction du disque (D).

9. Lecteur de disque selon la revendication 8, dans lequel le couvercle (6) qui peut être ouvert et fermé est ouvert et fermé par manoeuvre de l'électro-aimant (25).

10. Lecteur de disque selon la revendication 6 ou 7, dans lequel le commutateur (SI) est commandé par un organe de blocage du mécanisme de blocage (7) et est légèrement tourné lorsque le couvercle (6) est légèrement tourné par le disque (D).

## FIG. 1A

*F I G. 1B*

*F I G. 1C*

*F I G. 1D*

*F I G. 1E*

FIG. 2

FIG. 4

FIG. 3

## FIG. 5

## FIG. 6

F I G. 7

F I G. 8

## F I G. 9

## F I G. 11

## F I G. 10

FIG. 12

8

FIG. 13

*F I G. 14A*

42a(45a)  39a2(40a2)  39a(40a)  a  d₁  39a1(40a1)  d₂  39a2(40a2)

42b(45b)  d₂ d₂  39b1(40b1)  d₁  h  d₂  39b2(40b2)
39b2(40b2)  39b (40b)  $\ell_1$  $\ell_2$  $\ell$

*F I G. 15*

56  40a  50  53
60a 58c  56b  56a  50b 50a  53a 53b  47a 43  41
11  59  39a
55  42a
62  55  39b
60  58a  45b  42b
63  48(48')
58b  10  47(47')
58  57  54a 54b  52 51a 51  
61  54

## FIG. 14B

40a (40b)     40a₁ (40b₁)

40a₂(40b₂)     40a₂(40b₂)

F I G. 16

F I G. 17

F I G. 18

## F I G. 19A

## F I G. 19B

## F I G. 20